# EUROPÄISCHE PATENTSCHRIFT

(11) **EP 3 205 212 B1**
(45) Veröffentlichungstag und Bekanntmachung des Hinweises auf die Patenterteilung: **21.07.2021**
(21) Anmeldenummer: 17152178.4
(22) Anmeldetag: 19.01.2017
(51) Int. Cl.: A22C 11/02, A22C 11/00, A22C 11/10

(54) **VORRICHTUNG ZUM ABTRENNEN VON WÜRSTEN**
DEVICE FOR SEPARATING SAUSAGES
DISPOSITIF DE SÉPARATION DE SAUCISSES

(30) Priorität: 22.01.2016 DE 102016101167
(43) Veröffentlichungstag der Anmeldung: 16.08.2017
(73) Patentinhaber: Inotec GmbH Maschinenentwicklung und Vertrieb, 72770 Reutlingen (DE)
(72) Erfinder: DOMLATIL, Miroslav, 72766 Reutlingen (DE)
(74) Vertreter: Patentanwälte und Rechtsanwalt Weiß, Arat & Partner mbB

(56) Entgegenhaltungen:
- DE-A1- 4 318 301
- DE-A1-102009 024 555
- US-A- 3 646 637
- US-A- 4 584 740

## Beschreibung

Die Erfindung betrifft eine Vorrichtung zum Abtrennen von Würsten, die über eine Abdrehstelle zu einem Wurststrang zusammengefasst sind, wobei das Abtrennen an einer Schneidstelle erfolgt.

### Stand der Technik

Würste werden heute im industriellen Verfahren in der Regel vollautomatisch hergestellt und abgepackt. In entsprechenden Vorrichtungen wird das Wurstbrät in entsprechende Hüllen abgefüllt und dann durch Bildung von Abdrehstellen voneinander getrennt. Über diese Abdrehstellen hängen die Würste aneinander und müssen, sofern dies gewünscht wird, in einer Schneideinrichtung an der Abdrehstelle voneinander getrennt und vereinzelt werden.

Eine derartige Schneideinrichtung ist beispielsweise in der DE 42 18 783 A1 und der DE 4318301 A1 aufgezeigt. Diese Vorrichtungen arbeiten hervorragend, jedoch hat sich in der Praxis herausgestellt, dass die Würste dann nicht optimal voneinander getrennt werden, wenn die Abdrehstellen zu kurz oder die Wurstenden gebogen sind. Dann sieht der als Lichtschranke ausgebildete Sensor nicht mehr richtig und kann nicht ermitteln, wann die Wurst geschnitten werden soll. Hier kommt es dann zu Fehlschnitten.

Weiterhin ist in der DE 10 2009 024 55 A1 eine Neuerung bzw. Lösung der Probleme der beiden oben genannten Maschinen aufgeführt. Diese beschreibt, dass, der Wurststrang vor der Schneidstelle zwischen zumindest zwei Transportbandpaaren geführt wird. In der Praxis hat sich herausgestellt, dass es nicht ausreicht, das bisher schon vorhandene Transportbandpaar vor der Schneidstelle langsamer laufen zu lassen, da hierdurch nur die durch die Lichtschranke bereits aufgenommene Trennstelle verzogen wird und es so doch zu Fehlschnitten kommen kann. Das zweite, dem eigentlichen Transportbandpaar vorgeschaltete Transportbandpaar bewirkt dagegen, dass, wenn es langsamer läuft, der Wurststrang bereits vor dem Sensor auseinander gezogen wird und damit die Trennstelle bereits schon vor dem Sensor deutlich gemacht wird. Läuft dann die Trennstelle durch den Sensor kommt es hinterher zu keinem Verzug mehr, sondern der Sensor kann exakt die Trennstelle ermitteln und einen entsprechenden Schneidimpuls an das Schneidmesser abgeben.

Eine weitere Schneideinrichtung ist offenbart in der US 3 646 637 A. Es offenbart eine Vorrichtung zum Abtrennen von Würsten, die über eine Abdrehstelle zu einem Wurststrang zusammengefasst sind, wobei das Abtrennen an einer Schneidstelle erfolgt, wobei der Schneidstelle eine Bremseinrichtung zum Verlängern der Abdrehstelle vorgeschaltet ist.

### Aufgabe

Aufgabe der hier vorliegenden Erfindung ist es nun, die oben genannten Maschinen noch weiter zu vereinfachen und noch genauere Schnittergebnisse zu erzielen.

### Lösung der Aufgabe

Zur Lösung dieser Aufgabe führt, dass die Bremseinrichtung ein Loch aufweist, dessen Durchmesser geringer ist, als der Durchmesser der Würste, und wobei zu dem Loch eine Mehrzahl von Schlitzen radial verläuft.

Die Bremseinrichtung vor der Maschine bewirkt, dass die Geschwindigkeit der Wurstkette vermindert wird. Sie übernimmt quasi die Aufgabe des zweiten, langsamer laufenden Förderbands in der Maschine. Der Vorteil an der Bremsvorrichtung liegt darin, dass der technische Aufwand zum Abbremsen der Wurstkette erheblich geringer ist und somit auch die Produktionskosten gesenkt werden.

Bei einem Ausführungsbeispiel der Erfindung werden auf die Wurstkette Friktionen ausgeübt, was ein sehr zielgerichtetes Abbremsen der Wurstkette bewirkt.

Bevorzugt wird die Kette mit einer Klemmkraft umfangen, die dazu führt, dass die Wurstkette sehr genau ihren Weg in die Maschine findet und sich nirgends verwickeln kann, dennoch aber abgebremst wird.

Die Vorrichtung gemäß der Erfindung weist in ihrer Mitte ein Loch auf, welches einen etwas kleineren Durchmesser besitzt, als der Durchmesser der Würste. Somit ist ebenfalls ein zielgerichtetes Abbremsen der Kette möglich, denn jede einzelne Wurst wird hierdurch nochmals abgebremst.

Das Loch weist radial verlaufende Schlitze auf, die dazu führen, dass der Widerstand der die Würste umfängt nicht zu starr ist, sondern sich das Loch erweitern kann, zumal wenn sich das Loch in einem flexiblen Werkstoff befindet Des weiteren ist einer dieser Schlitze zum Einfädeln der Wurstkette angedacht, was die Handhabung dieser Bremsvorrichtung enorm erleichtert.

Die Bremsvorrichtung ist aus einem flexiblen Werkstoff, wie beispielsweise Gummi, hergestellt. Dadurch wird zum einen der Verschleiss der Vorrichtung verringert und die Wurstkette bzw. die Haut der Würste zum anderen nicht verletzt. Die Reibkraft oder Friktion zum Verzögern des Durchzugs der Wurst wird aber versessert.

Ein Sensor ist nach der Bremsvorrichtung zu finden, der die verlangsamten Abdrehstellen erfassen und dann genau an der vorgesehenen Schneidstelle ein Schneidwerkzeug auslösen kann. Dies führt zu einem sehr genauen Arbeiten der Maschine und zu einem noch besseren Ergebnis.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Draufsicht auf eine erfindungsgemässe Vorrichtung zum Trennen von Würsten;
Figur 2 eine perspektivische Ansicht eines Teils der Vorrichtung gemäss Figur 1;
Figur 3 eine perspektivische Ansicht eines erfindungsgemässen Teils der Vorrichtung nach Figur 2 mit Bremseinrichtung;
Figur 4 eine perspektivische Ansicht einer Bremsplatte.

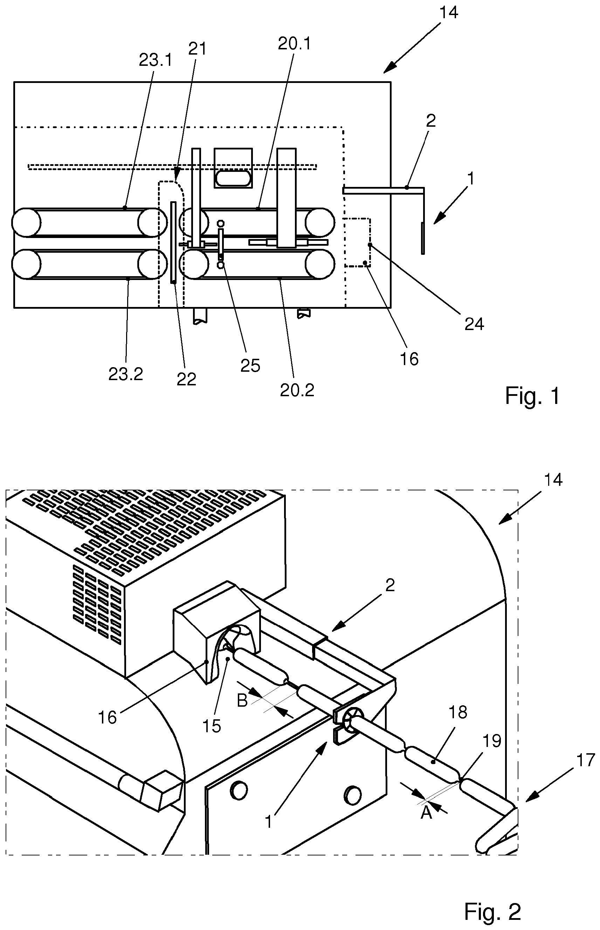

Gemäss Fig. 1 weist eine Maschine 14 zum Trennen von Würsten 18, die in Figur 2 dargestellt werden, Transportbänder 20.1 und 20.2 und eine Schneidstelle 21 auf, welche nur gestrichelt angedeutet ist. In der Schneidstelle 21 ist ein Spalt 22 für ein Trennmesser zum Durchtrennen einer Abdrehstelle zwischen zwei Würsten 18 vorgesehen.

Auf die Schneidstelle 21 folgen zwei weitere Transportbänder 23.1 und 23.2, die dazu dienen, die in der Schneidstelle 21 vom Wurststrang abgetrennten Würste 18 einzeln weiter zu transportieren. Zur Führung der Würste 18 ist rechtsseitig ein gerundeter Einlauf 24 angedeutet.

Der Schneidstelle 21 ist ein Sensor 25 vorgeschaltet, über den ein Servomotor zum Drehen des Messers durch den Spalt 22 angesteuert wird. Dabei ist der Sensor etwa 100 mm vor dem Spalt 22 angeordnet.

Weitere Funktionen und Bauteile der Maschine 14 werden in der DE 10 2009 024 555 A1 beschrieben.

In Figur 2 wird der Teil der Maschine 14 gezeigt, vor der ein Arm 2 mit einer Bremsvorrichtung 1 in einem vorbestimmten Abstand positioniert ist. Die Maschine 14 weist einen Eingang 15 auf, der wiederum einen Einlaufschutz 16 ausformt.

Weiterhin wird eine Wurstkette 17 gezeigt, die aus verschiedenen kleinen Würsten 18 besteht, die über Abdrehstellen 19 miteinander verbunden sind. Die Abdrehstellen 19 weisen vor der Bremsvorrichtung 1 einen Abstand A auf und nach der Bremsvorrichtung 1, bevor sie in die Maschine 14 einfahren, einen Abstand B auf, der grösser ist als der Abstand A.

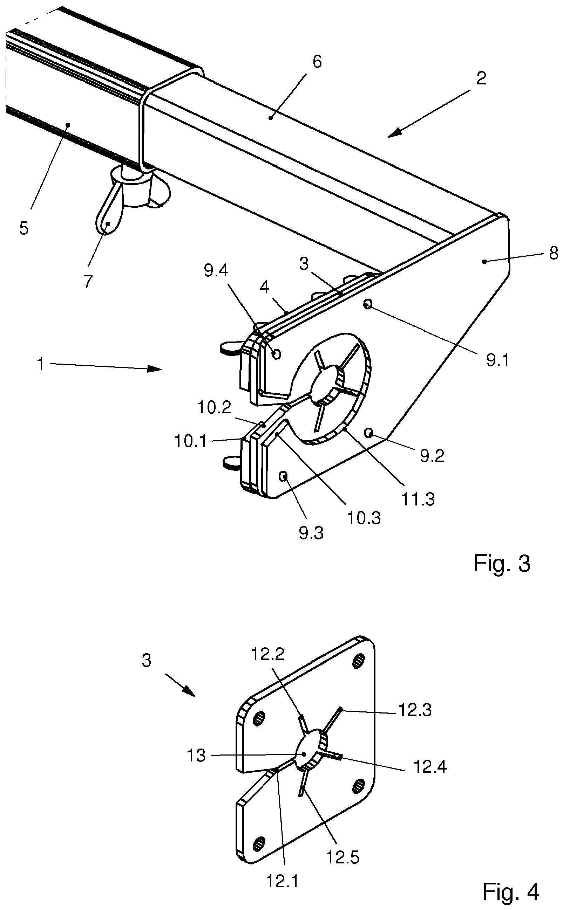

In Figur 3 wird die Bremsvorrichtung 1 und der Arm 2 im Detail gezeigt. Der Arm 2 besteht aus einem Hohlrohr 5, in das ein weiteres Rohr 6 eingeschoben werden kann. Damit kann die Länge des Arms 2 verstellt werden. Über eine Schraube 7 wird das Rohr 6 im Hohlrohr 5 festgelegt.

Dem Rohr 6 ist eine Platte 8 in einer L-Form zugeordnet, die wiederum vier Bohrungen 9.1 - 9.4 aufweist, über welche die Bremsvorrichtung 1 befestigt wird.

Die Bremsvorrichtung 1 besteht aus einer Bremsplatte 3, die im bevorzugten Ausfühungsbeispiel aus Gummi besteht, und einer Deckplatte 4, die im bevorzugten Ausfühungsbeispiel aus Metall gefertigt ist.

Sowohl die Bremsplatte 3 als auch die Deckplatte 4 weisen, wie die Platte 8, vier Bohrungen auf, über die sie an der Platte 8 bzw. am Arm 2 befestigt werden. Auf die Platte 8 wird zunächst die Bremsplatte 3 und darauf dann die Deckplatte 4 befestigt. Zusammen bilden sie eine Art Sandwich.

Die Bremsplatte 3 und die Deckplatte 4 sind vorzugsweise rechteckig ausgebildet und weisen gemeinsam mit der Platte 8 an einer Seite eine zu ihrer Mitte hin schräg verlaufende Öffnung 10.1 - 10.3 auf, welche in einer kreisrunden Öffnung 11.1 - 11.3 münden.

Die Bremsplatte 3 weist gemäss Figur 4 fünf Schlitze 12.1 - 12.5 und mittig ein Loch 13 auf, wobei ein Schlitz 12.1 die schräg nach innen verlaufende Öffnung 10 mit dem Loch 13 verbindet. Durch diesen Schlitz 12.1 wird gemäss Figur 2 eine Wurstkette 17 in das Loch 13 eingefädelt. Die übrigen Schlitze 12.2 - 12.5 sind nur Einschnitte, damit eine Öffnungsweite des Lochs 13 in der Bremsplatte 3 nicht starr ist, sondern sich dem Durchmesser der Wurst anpassen kann.

Die Funktionsweise der vorliegenden Erfindung ist Folgende:
Eine Wurstkette 17, bestehend aus einer Reihe kleinen Würsten 18, die über Abdrehstellen 19 miteinander verbunden sind, wird in die Bremsvorrichtung 1 eingeführt, indem sie über die schräg verlaufende Öffnung 10.2 und den Schlitz 12.1 in das Loch 13 der Bremsplatte 3 eingefädelt wird.

Ein Ende der Wurstkette 17 wird in den Eingang 15 der Maschine 14 geschoben und automatisch von den Förderbändern 20.1 und 20.2 in die Maschine 14 eingezogen.

Von der Wurstkette 17 sollen nun in einzelne Würste 18 abgetrennt werden. Dazu ist in der Maschine 14 die Schneidstelle 21 vorgesehen, die diese trennt.

Damit die Kette 17 auseinandergezogen wird, bremst die Bremsvorrichtung 1 diese ab. Dies geschieht dadurch, dass das Loch 13 einen etwas kleineren Durchmesser aufweist, als die Würste 18 und diese somit einen Widerstand überwinden müssen, um in die Maschine 14 zu gelangen. Die Abdrehstelle 19, die vor der Bremsvorrichtung 1 eine Länge von A aufweist, ist nach der Bremsvorrichtung 1 auf die Länge von B ausgedehnt worden, so dass sie auf einer grösseren Länge geschnitten werden kann und die Gefahr der Verletzung der Würste minimiert wird

Damit hat auch der in der Maschine 14 angebrachter Sensor 25 genug Zeit, die Würste 18 zu erfassen und in der Schneidstelle 21 die Position der Abdrehstelle zu übermitteln.

**Bezugszeichenliste**

| | | | | | |
|---|---|---|---|---|---|
| 1 | Bremsvorrichtung | 34 | | 67 | |
| 2 | Arm | 35 | | 68 | |
| 3 | Bremsplatte | 36 | | 69 | |
| 4 | Deckplatte | 37 | | 70 | |
| 5 | Hohlrohr | 38 | | 71 | |
| 6 | Rohr | 39 | | 72 | |
| 7 | Schraube | 40 | | 73 | |
| 8 | Platte | 41 | | 74 | |
| 9 | | 42 | | 75 | |
| 10 | Schräge Öffnung | 43 | | 76 | |
| 11 | Kreisrunde Öffnung | 44 | | 77 | |
| 12 | Schlitz | 45 | | 78 | |
| 13 | Loch | 46 | | 79 | |
| 14 | Maschine | 47 | | | |
| 15 | Eingang | 48 | | | |
| 16 | Einlaufschutz | 49 | | | |
| 17 | Wurstkette | 50 | | | |
| 18 | Würste | 51 | | | |
| 19 | Abdrehstelle | 52 | | | |
| 20 | Transportband | 53 | | | |
| 21 | Schneidstelle | 54 | | | |
| 22 | Spalt | 55 | | | |
| 23 | Transportband | 56 | | | |
| 24 | Einlauf | 57 | | | |
| 25 | Sensor | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum Abtrennen von Würsten (18), die über eine Abdrehstelle (19) zu einem Wurststrang zusammengefasst sind, wobei das Abtrennen an einer Schneidstelle (21) erfolgt, wobei der Schneidstelle (21) eine Bremseinrichtung (1) zum Verlängern der Abdrehstelle (19) vorgeschaltet ist, **dadurch gekennzeichnet, dass** die Bremseinrichtung (1) ein Loch (13) aufweist, dessen Durchmesser geringer ist, als der Durchmesser der Würste (18), und wobei zu dem Loch (13) eine Mehrzahl von Schlitzen (12.1-12.5) radial verläuft.

2. Vorrichtung nach Anspruch 1, **dadurch gekennzeichnet, dass** die Bremseinrichtung (1) eine Geschwindigkeit der Wurstkette (17) vermindert.

3. Vorrichtung nach Anspruch 2, **dadurch gekennzeichnet, dass** die Bremseinrichtung (1) eine Friktion auf die Wurstkette (17) ausübt.

4. Vorrichtung nach Anspruch 2 oder 3, **dadurch gekennzeichnet, dass** die Bremseinrichtung (1) die Wurstkette (17) mit einer Klemmkraft umfängt.

5. Vorrichtung nach Anspruch 4, **dadurch gekennzeichnet, dass** ein Schlitz (12.1) zum Einfädeln des Wurststranges (19) ausgebildet ist.

6. Vorrichtung nach wenigstens einem der vorhergehenden Ansprüche, **dadurch gekennzeichnet, dass** die Bremseinrichtung (1) aus flexiblem Werkstoff hergestellt ist.

7. Vorrichtung nach wenigstens einem der vorhergehenden Ansprüche, **dadurch gekennzeichnet, dass** die Bremseinrichtung (1) einem Sensor (25) für die Erfassung der Abdrehstelle (19) vorgeschaltet ist.

## Claims

1. Device for separating sausages (18) which are combined into a sausage strand via a twisting-off point (19), wherein the separation takes place at a cutting point (21), wherein a braking device (1) for extending the twisting-off point (19) is connected upstream of the cutting point (21),
**characterized in that**
the braking device (1) has a hole (13), whose diameter is smaller than the diameter of the sausages (18), and wherein a plurality of slots (12.1-12.5) extend radially to the hole (13).

2. Device according to claim 1, **characterized in that** the braking device (1) reduces a speed of the sausage chain (17).

3. Device according to claim 2, **characterized in that** the braking device (1) exerts a friction on the sausage chain (17).

4. Device according to claim 2 or 3, **characterized in that** the braking device (1) surrounds the sausage chain (17) with a clamping force.

5. Device according to claim 4, **characterized in that** a slot (12.1) is formed for threading the sausage strand (19).

6. Device according to at least one of the previous claims, **characterized in that** the braking device (1) is made of flexible material.

7. Device according to at least one of the previous claims, **characterized in that** the braking device (1) is connected upstream of a sensor (25) for detecting the twisting-off point (19).

## Revendications

1. Dispositif permettant de couper des saucisses (18) combinées pour former un cordon de saucisses par l'intermédiaire d'un point de torsion (19), la coupe s'effectuant à un point de coupe (21),
le point de coupe (21) étant précédé d'une installation de freinage (1) permettant d'allonger le point de torsion (19),
**caractérisé en ce que** l'installation de freinage (1) présente un orifice (13) dont le diamètre est inférieur au diamètre des saucisses (18),
et une pluralité de fentes (12.1-12.5) s'étendant radialement à l'orifice (13).

2. Dispositif selon la revendication 1, **caractérisé en ce que** l'installation de freinage (1) réduit une vitesse du chapelet de saucisses (17).

3. Dispositif selon la revendication 2, **caractérisé en ce que** l'installation de freinage (1) exerce un frottement sur le chapelet de saucisse (17).

4. Dispositif selon la revendication 2 ou 3, **caractérisé en ce que** l'installation de freinage (1) entoure le chapelet de saucisses (17) avec une force de serrage.

5. Dispositif selon la revendication 4, **caractérisé en ce qu'**une fente (12.1) est réalisée pour permettre l'enfilage du cordon de saucisses (19).

6. Dispositif selon au moins l'une des revendications précédentes, **caractérisé en ce que** l'installation de freinage (1) est fabriquée à partir d'un matériau souple.

7. Dispositif selon au moins l'une des revendications précédentes, **caractérisé en ce que** l'installation de freinage (1) est précédée par un capteur (25) pour la détection du point de torsion (19).
